# EUROPÄISCHE PATENTSCHRIFT

(11) **EP 0 935 543 B1**
(45) Veröffentlichungstag und Bekanntmachung des Hinweises auf die Patenterteilung: **25.07.2001**
(21) Anmeldenummer: 97909241.8
(22) Anmeldetag: 10.09.1997
(51) Int. Cl.: B60R 25/04, E05B 49/00

(54) **VORRICHTUNG MIT EINEM SCHLIESSZYLINDER UND EINER SCHALTEINRICHTUNG FÜR VERSCHIEDENE ELEKTRISCHE FUNKTIONEN, INSBESONDERE ZÜNDANLASSSCHALTER FÜR KRAFTFAHRZEUGE**
DEVICE WITH A CLOSING CYLINDER AND A SWITCH FOR VARIOUS ELECTRIC FUNCTIONS, IN PARTICULAR IGNITION STARTER SWITCH FOR MOTOR VEHICLES
DISPOSITIF AVEC UN CYLINDRE DE FERMETURE ET UN COMMUTATEUR DE FONCTIONS ELECTRIQUES DIVERSES, NOTAMMENT CONTACTEUR D'ALLUMAGE POUR VEHICULES A MOTEUR

(30) Priorität: 05.11.1996 DE 19645461
(43) Veröffentlichungstag der Anmeldung: 18.08.1999
(73) Patentinhaber: HUF HÜLSBECK & FÜRST GMBH & CO. KG, 42551 Velbert (DE)
(72) Erfinder: KEMMANN, Harald, D-42555 Velbert (DE); SIMON, Jörg, D-42579 Heiligenhaus (DE)
(74) Vertreter: Mentzel, Norbert, Dipl.-Phys.
(86) Internationale Anmeldenummer: EP9704940
(87) Internationale Veröffentlichungsnummer: WO9819897

(56) Entgegenhaltungen:
- EP-A- 0 464 278
- DE-A- 19 547 304
- GB-A- 2 026 081
- US-A- 5 202 580

## Beschreibung

Die Erfindung richtet sich auf eine Vorrichtung der im Oberbegriff des Anspruches 1 angegebenen Art. Eine gattungsgemässe Vorrichtung ist aus US-A-5 186 031 bekannt. Der Schließzylinder besteht aus einem ortsfesten Zylindergehäuse und einem darin drehgelagerten Zylinderkern.
Nur in einer bestimmten Ausgangs-Drehstellung des Zylinderkerns ist ein Einstecken und Herausziehen des Schlüssels in dessen Schlüsselkanal möglich. Durch Schlüsseldrehung kann der Zylinderkern in bestimmte definierte Drehstellungen gebracht werden, die nachfolgend kurz "Arbeitsstellungen" bezeichnet werden sollen. In diesen Arbeitsstellungen werden über die Schalteinrichtung bestimmte elektrische Funktionen im Kraftfahrzeug oder einem anderen Nutzgegenstand wirksam bzw. unwirksam gesetzt.

Bei der Anwendung in Kraftfahrzeugen dient eine solche Vorrichtung als sogenannter "Zündanlaßschalter". Bei der bekannten Vorrichtung befindet sich am Innenende des Schließzylinders die Schalteinrichtung, die - außer einem bei der Schlüsseldrehung mitbeweglichen Kontaktglied - auch ortsfeste Kontakte besitzt, die mit der gegebenen Bordelektrik elektrisch verbunden sind. Das bewegliche Schaltglied ist drehfest mit dem Zylinderkern gekuppelt. In den Arbeitsstellungen kommt das bewegliche Kontaktglied mit jenem ortsfesten Kontakt in elektrische Verbindung, an welchem das für diese Funktion zuständige Aggregat im Kraftfahrzeug angeschlossen ist. Bei einem Zündanlaßschalter gibt es, außer der Ausgangs-Drehstellung, in der Regel noch drei Arbeitsstellungen. Dazu gehört zunächst eine erste Arbeitsstellung für das Einschalten der Kraftfahrzeug-Elektrik, eine zweite Arbeitsstellung für die Zündfreigabe des im Kraftfahrzeug vorgesehenen Verbrennungsmotors und eine dritte Arbeitsstellung für das Anlassen des Motors.

Die Schalteinrichtung erfordert bei der bekannten Vorrichtung beträchtlichen Platz und ist an einer Stelle angeordnet, die dann für andere wichtige Bauteile im Kraftfahrzeug nicht mehr zur Verfügung steht. Bei dem bekannten Zündanlaßschalter befindet sich die Schalteinrichtung am Innenende des Schließzylinders. So ist der Zündanlaßschalter regelmäßig im Bereich der Lenksäule eines Kraftfahrzeugs angeordnet, wo er weitere Aufgaben zu erfüllen hat. Dazu gehört die Blockade der Lenksäule bei abgezogenem Schlüssel. Bei mechanischer Kontaktierung der Glieder in der Schalteinrichtung ergeben sich Probleme. Die Winkelabstände zwischen den die unterschiedlichen Funktionen auslösenden Arbeitsstellungen des Zylinderkerns können sehr klein sein, weshalb die Kontaktabstände in der Schalteinrichtung nur dann zuverlässig zu unterscheiden sind, wenn ein ausreichend großer radialer Platz für die Winkelverstellung des beweglichen Schaltglieds zur Verfügung steht. Außerdem muß schon aus Sicherheitsgründen ein Mindestplatzbedarf für die Schalteinrichtung vorhanden sein. All dies erhöht den Platzbedarf.

Es gibt Schlösser (US 5 186 031 A), bei dem ein Permanentmagnet am Umfang des Zylinderkerns angeordnet ist. Bei einer Zylinderdrehung durch den Schlüssel erfolgt eine elektronische Abfrage über einen im Zylindergehäuse integrierten Sensor, der auf das Magnetfeld des vorbeibewegten Zylinderkerns anspricht. Dadurch soll die Elektrik im Kraftfahrzeug aktiviert werden, durch welche dann die vorbeschriebene Schalteinrichtung erst wirksam gesetzt werden kann. Reißt man den Schließzylinder gewaltsam heraus, dann sind elektrische Manipulationen an den Kontakten erfolglos. Ohne Aktivierung der Schalteinrichtung über den am vorbeibewegten Permanentmagneten bleibt die Schalteinrichtung unwirksam. _ Eine Raumersparnis im Aufbau der bekannten Vorrichtung erschien dadurch nicht möglich.

Bei einer anderen Vorrichtung (US 5 455 571 A) hat man das nicht autorisierte Ablesen des Aktivierungssignals durch Unbefugte dadurch zu erschweren versucht, daß man noch einen zweiten Sensor vorsah, der auf den Signal-Ausgang des angesprochenen ersten Sensors einwirkte. Dadurch sollte die Ermittlung des Signalwerts für Außenstehende verhindert werden.

Der Erfindung liegt die Aufgabe zugrunde, eine zuverlässige Vorrichtung der im Oberbegriff des Anspruches 1 genannten Art zu entwickeln, die einfach und raumsparend ist. Dies wird erfindungsgemäß durch die im Kennzeichen des Anspruches 1 angeführten Maßnahmen erreicht, denen folgende besondere Bedeutung zukommt.

Die Permanentmagneten im Zylinderkern einerseits und die Sensoren im Zylindergehäuse andererseits werden dazu genutzt, um alle definierten Arbeitsstellungen des Zylinderkerns zu codieren. Über die Sensoren kann daher die jeweilige Arbeitsstellung des Zylinderkerns eindeutig identifiziert und einem Auswerter gemeldet werden, der dann zugleich als eine elektronische Schalteinrichtung wirkt und die individuellen elektrischen Funktionen im Kraftfahrzeug oder einem anderen Nutzgegenstand auslöst. Während im Stand der Technik die Ermittlung der Drehstellung über ein mit dem Zylinderkern mitbewegliches Glied der Schalteinrichtung erfolgte, wird bei der Erfindung die Identifizierung der Drehstellungen den ortsfesten Sensoren im Zylindergehäuse überlassen. Der vom Code gesteuerte Auswerter für die codespezifischen elektrischen Funktionen ist nur über Signalleitungen geringen Durchmessers mit den Ablesestellen im Zylindergehäuse verbunden und kann an einem beliebig weit entfernten Ort angeordnet sein.

Weil es sich jetzt auch nicht mehr um mechanische, sondern nur um elektronische Bauteile handelt, welche die gewünschten elektrische Funktion bewirken, läßt sich außerdem die Schalteinrichtung bei der erfindungsgemäßen Vorrichtung außerordentlich raumsparend und preiswert herstellen. Die erfindungsgemäße Vorrichtung bedarf im Zylindergehäuse nur Löcher zur Aufnahme der die Codierung ermittelnden Sensoren, wie auch die Permanentmagnete im Zylinderkern an den für die Codierung maßgeblichen Umfangsstellen ebenfalls in Bohrungen abgesenkt angeordnet sein können. Das bedeutet, daß bei der erfindunsgemäßen Vorrichtung der Schließzylinder nicht platzaufwendiger als im Stand der Technik aufgebaut zu sein braucht, aber der Platz am Innenende des Schließzylinders, wo bisher die Schalteinrichtung angeordnet war, anderweitig verwendet werden kann.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel schematisch dargestellt. Es zeigen:
- Fig. 1a,: teilweise im Ausbruch, den Längsschnitt durch den Schließzylinder der erfindungsgemäßen Vorrichtung in der Ausgangs-Drehstellung des Zylinderkerns, wenn noch kein Schlüssel eingesteckt ist,
- Fig. 1b und 1c: Querschnitte durch den Schließzylinder von Fig. 1a längs der Schnittlinien 1b-1b bzw. 1c-1c,
- Fig. 2a,: in einem der Fig. 1a entsprechenden Längsschnitt, zwar auch die Ausgangs-Drehstellung des Schließzylinders, aber bei eingestecktem Schlüssel,
- Fig. 2b: den in Fig. 1b bereits gezeigten Querschnitt in der Ausgangs-Drehstellung, allerdings nach dem Einstecken des Schlüssels,
- Fig. 3a, Fig. 4a und Fig. 5a: Längsschnitte analog zu Fig. 1a, wenn über den eingesteckten Schlüssel der Zylinderkern in drei weitere Drehstellungen überführt worden sind, die der Einschaltposition der Kraftfahrzeug-Elektrik, der Zündposition des Motors und der Startposition des Motors entsprechen,
- Fig. 3b, 4b und 5b: der Fig. 1b entsprechende Querschnitte durch den Schließzylinder, wenn sich dessen Zylinderkern in den drei weiteren Drehstellungen gemäß Fig. 3a, 4a bzw. 5a befindet,
- Fig. 3c, 4c und 5c: weitere Querschnitte durch den Schließzylinder in Analogie zu Fig. 1c, wenn die entsprechenden schlüsselbedingten Drehstellungen der Fig. 3a, 4a bzw. 5a vorliegen,
- Fig. 6: eine Code-Tabelle für die in den verschiedenen Drehstellungen von Fig. 1a bis 5c anfallenden Signale,
- Fig. 7: ein schematisches Schaltbild eines Auswerters für die in der Ausgangs-Drehstellung von Fig. 2a, 2b und den Arbeitsstellungen von Fig. 3a bis 5c anfallenden Signale, und
- Fig. 8: ein Teilstück einer zweiten Ausführungsform des Schließzylinders nach der Erfindung.

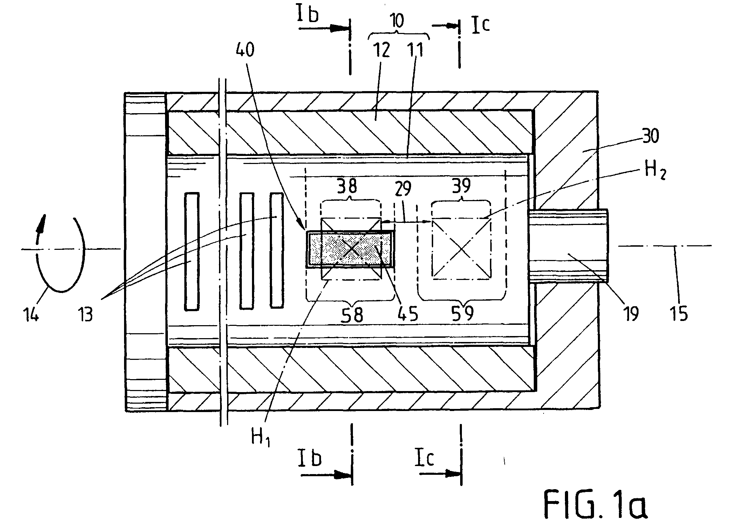

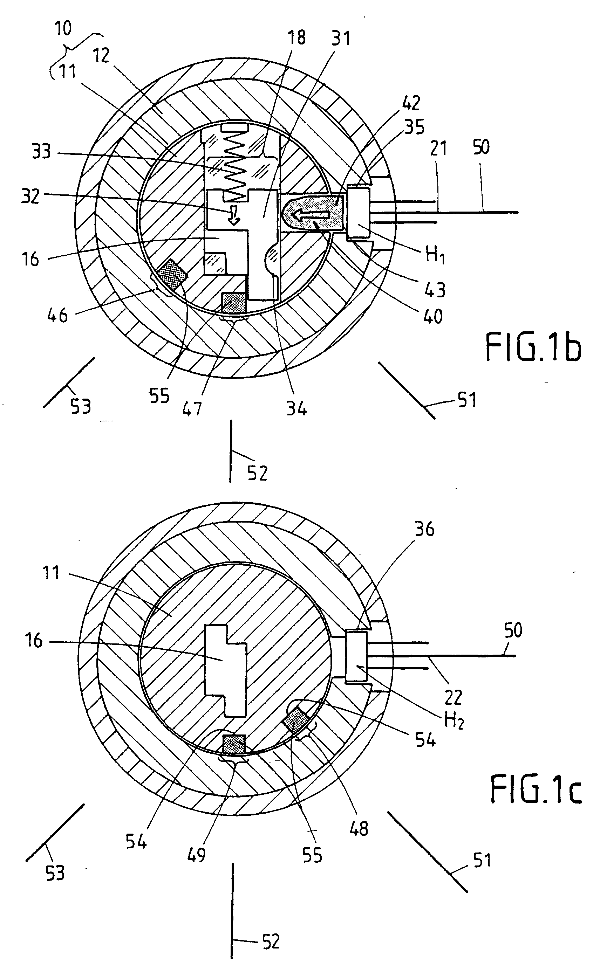

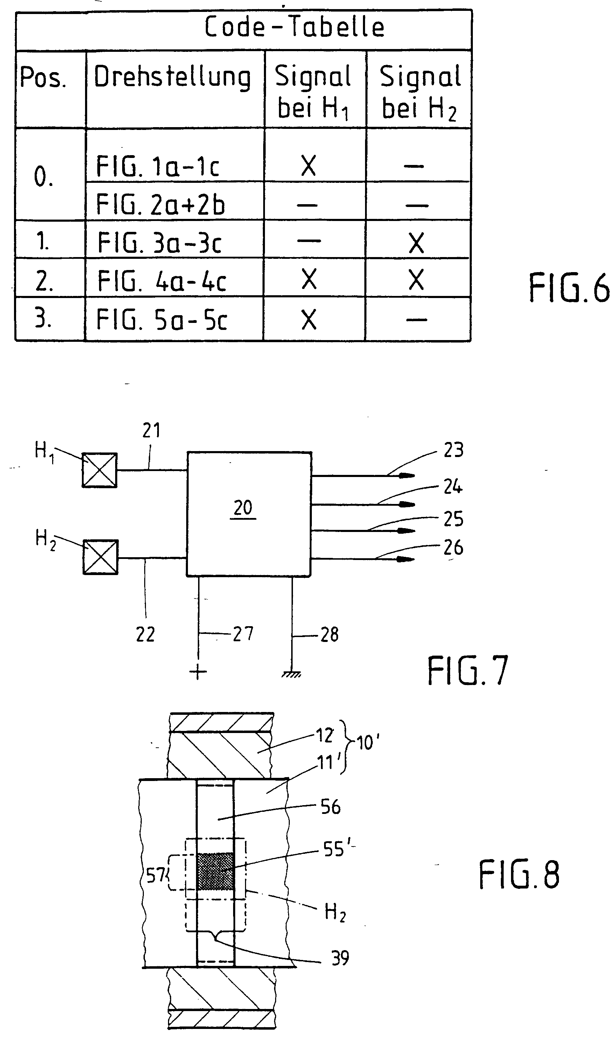

Die erfindungsgemäße Vorrichtung umfaßt einerseits einen Schließzylinder 10 gemäß Fig. 1a bis 5c und andererseits einen elektronischen Auswerter 20, dessen prinzipieller Aufbau in Fig. 7 veranschaulicht ist. Bereits der Schließzylinder 10 umfaßt aber nicht nur mechanische, sondern auch elektrisch wirksame Bauteile.

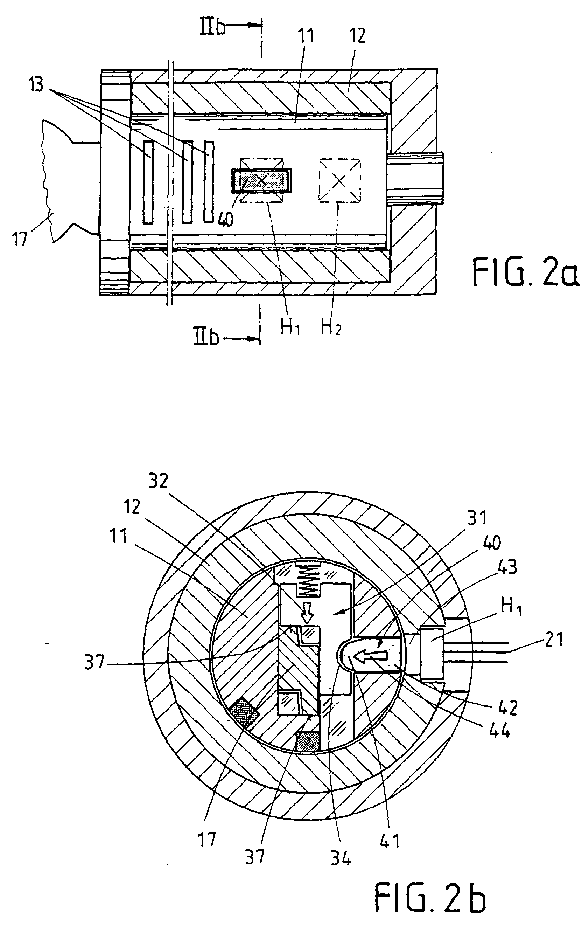

Der Schließzylinder besteht aus einem Zylinderkern 11 und einem Zylindergehäuse 12. Während das Zylindergehäuse 12 ortsfest in einem Chassi 30 eines Kraftfahrzeugs befestigt ist, ist der Zylinderkern 11 im Zylindergehäuse 12 drehbar gelagert. Der Zylinderkern umfaßt im Inneren zunächst Kammern für übliche, federbelastete Zuhaltungen 13, von denen nur eine in Fig. 1a angedeutet ist. Das Zylindergehäuse 12 besitzt in üblicher Weise nicht näher gezeigte Sperrkanäle, in welche die Zuhaltungen 13 normalerweise eingreifen und eine Drehung des Zylinderkerns 11 im Sinne des Pfeils 14 von Fig. 1a um die strichpunktiert angedeutete Zylinderachse 15 verhindern. Der Zylinderkern 11 besitzt außerdem noch einen aus Fig. 1b und 1c ersichtlichen Schlüsselkanal 16, der bedarfsweise, wie aus Fig. 2a und 2b zu ersehen ist, zur Aufnahme eines Schlüssels 17 dient, und schließlich eine radiale Kammer 18, in welcher ein Schieber 31 angeordnet ist, der unter der Kraft 32 einer ihn belastenden Feder 33 steht.

Die Fig. 1a bis 1c zeigen eine Ausgangs-Drehstellung des Zylinderkerns 11. Diese Drehstellung ist durch die Hilfslinie 50 in Fig. 1b veranschaulicht. In diesem Fall ist eine Sperrleiste 40 radial ausgefahren und greift mit ihrem äußeren Arbeitsende 42 in eine Gehäusenut 43 ein; sie wirkt wie eine Zuhaltung und blockiert gemäß Fig. 1b eine Drehung des Zylinderkerns 11. Die Sperrleiste 40 ist in Fig. 1a bis 1c in ihrer "Sperrlage". Steckt man den ordnungsgemäßen Schlüssel 17 in den Schlüsselkanal 16 gemäß Fig. 2a und 2b ein, so werden über am Schlüsselprofil vorgesehene Steuerflächen 37 nicht nur die erwähnten Zuhaltungen 13 auf den Querschnitt des Zylinderkerns 11 einsortiert, was zu einer Entsperrung des Zylinderkerns 11 führt, sondern es wird auch der Schieber 31 gegen die auf ihn wirkende Federkraft 32 in die aus Fig. 2b ersichtliche Position zurückgedrückt, wo eine im Schieber 31 vorgesehene Aussparung 34 in Ausrichtung mit dem Steuerende 41 einer Sperrleiste 40 kommt.

Fig. 2b zeigt die gleiche Ausgangs-Drehstellung 50 des Zylinderkerns 11 wie Fig. 1b, wie aus der Drehlage der Sperrleiste 40 zu erkennen ist. Die Sperrleiste 40 ist außerdem im Sinne des Pfeils 44 federbelastet. Das dies veranlassende Federmittel ist in den Fig. nicht näher gezeigt. Während die vorerwähnte radiale Ausrichtung vorliegt, kann daher das Steuerende 41 der Sperrleiste 40 in die Aussparung 34 einfahren. Dann ist das Sperrleisten-Arbeitsende 42 aus der Gehäusenut 43 entfernt. Bei eingestecktem Schlüssel 17 ist folglich die von der Sperrleiste 40 bisher verursachte Blockade aufgehoben, die Sperrleiste befindet sich in ihrer "Freigabelage" und der Zylinderkern 11 ist durch Schlüsselbetätigung im Sinne des Pfeils 14 verdrehbar. In Abhängigkeit von dem Ausmaß dieser Drehung 14 gelangt der Zylinderkern 11 in drei definierte Drehstellungen 51, 52, 53, die bestimmte elektrische Funktionen in der erfindungsgemäßen Vorrichtung auslösen und daher, wie schon eingangs gesagt, "Arbeitsstellungen" genannt werden sollen. Aus Gründen besserer Deutlichkeit sind diese Arbeitsstellungen nicht nur in gleichen, sondern auch in übertrieben großen Winkelabschnitten zueinander angeordnet, was durch die Hilfslinien 51, 52, 53 verdeutlicht ist. Die Lage dieser Hilfslinien ergibt sich aus der jeweiligen Drehstellung der Sperrleiste 40.

Im vorliegenden Ausführungsbeispiel handelt es sich um einen sogenannten Zündanlaßschalter in einem Kraftfahrzeug. Nur wenn sich sein Zylinderkern 11 in der Ausgangsdrehstellung 50 von Fig. 1a bis 1c befindet, ist es möglich, den Schlüssel 17 in den Schlüsselkanal 16 hineinzustecken, was in Fig. 2a und 2b veranschaulicht ist, oder wieder herauszuziehen. Nur in dieser Ausgangs-Drehstellung 50 sind nämlich die Zuhaltungen 13 mit den erwähnten Sperrkanälen im Gehäuse 12 radial ausgerichtet und lassen sich radial bewegen. Ohne eingesteckten ordnungsgemäßen Schlüssel ist in der Ausgangs-Drehstellung 50 die Kraftfahrzeug-Elektrik abgeschaltet. Bei der vorliegenden Erfindung ist, solange der ordnungsgemäße Schlüssel 17 nicht voll in den Zylinderkern 11 eingefahren ist, d. h. in der Situation gemäß Fig. 1 bis 1c, außerdem der Auswerter 20 inaktiv. Dann ist der Auswerter auch im Falle einer manipulierten Stromversorgung tot und nicht in der Lage, irgendwelche elektrischen Steuerfunktionen zu erledigen. Durch Einstecken des Schlüssels 17, gemäß Fig. 2a und 2b, wird aber bei der Erfindung der Auswerter "aktiviert" und wird für die weiteren Funktionen nutzbar. Dies kommt bei der vorliegenden Erfindung durch eine besondere Ausbildung der Sperrleiste 40 zustande.

Bei der erfindungsgemäßen Vorrichtung besteht nämlich die Sperrleiste 40 aus einem Magnetmaterial 45, das die Sperrleiste 40 zu einem radial beweglichen "Permanentmagneten" macht. Die Verwendung des Magnetmaterials 45 in der Sperrleiste 40 ist durch eine leichte Punktschraffur in den Zeichnungen veranschaulicht. Diesem Permanentmagneten 40 ist ein erster Sensor H1 zugeordnet, der in einer geeigneten Aufnahme 35 vom Zylindergehäuse 12 befestigt ist. Der Sensor H1 ist ein Hall-Element, das in der mit 38 in Fig. 1a gekennzeichneten Zone des Zylindergehäuses 12 angeordnet ist. In einem axialen Versatz 29 ist im Zylindergehäuse 12 eine weitere Aufnahme 36 für einen weiteren Sensor H2 vorgesehen, das ebenfalls ein Hall-Element ist. Die Lage dieser beiden Sensoren H1, H2 ist jeweils strichpunktiert in Fig. 1a eingezeichnet, woraus ihre Lage in den beiden Gehäusezonen 38, 39 ersichtlich ist. In der Ausgangs-Drehstellung 50 befindet sich am Sensor H2 kein Magnet, wie aus Fig. 1c hervorgeht. Beide Sensoren H1, H2 sind mit ihren Ausgängen 21, 22 an dem gemeinsamen Auswerter 20 gemäß Fig. 7 angeschlossen. Diese stellt in diesem Fall an der Sensor-Ausgangsleitung 21 von H1 das Magnetfeld der gemäß Fig. 1b radial ausgefahrenen Sperrleiste 40 fest und an der Ausgangsleitung 22 von H2 kein Signal. Dieser Sachverhalt wird als ein definierter Code vom Auswerter 20 erkannt, der die Bordelektronik in diesem Fall inaktiv läßt. Dieser Sachverhalt, ein "ja/nein"-Code, ist in der obersten Zeile der in Fig. 6 dargestellten Code-Tabelle eingezeichnet.

Wird nun der Schlüssel 17 gemäß Fig. 2a, 2b eingesteckt, so gelangt die Sperrleiste 40 in ihre vorbeschriebene Freigabelage, wo der Abstand zum Hall-Generator H1 vergrößert wird. Dies macht sich gegenüber dem Sensor H1 in einer deutlichen Minderung des Magnetfeldes bemerkbar, was vom Auswerter als "Nicht-Signal" interpretiert wird. Der Auswerter 20 stellt auch beim Sensor H2 kein Signal fest. Dieser Sachverhalt ist in der zweiten Zeile der Code-Tabelle von Fig. 6 vermerkt. Der Übergang des ursprünglichen Codes "ja/nein" gemäß Fig. 1a bis 1c in den Code "nein/nein" von Fig. 2a, 2b veranlaßt den Auswerter 20 zu der Feststellung, daß der ordnungsgemäße Schlüssel eingesteckt worden ist. Der Auswerter 20 aktiviert über eine Datenleitung die entsprechenden Aggregate im Kraftfahrzeug, wie einem Bordcomputer, der auf entsprechende Steuergeräte, z. B. eine Wegfahrsperre, einwirkt. Das ist zwar in Fig. 7 durch eine erste Ausgangsleitung 23 veranschaulicht, doch könnte dies auch über eine sämtliche Ausgangsleitungen 23 bis 26 ersetzende, gemeinsame Busleitung erfolgen, welche die über den Code vom Auswerter erzeugten digitalen Daten an eine Zentralelektrik im Kraftfahrzeug leitet. Der Auswerter 20 ist gemäß Fig. 7 mit einer Stromversorgung 27 versehen und über die Leitung 28 an die Masse angeschlossen.

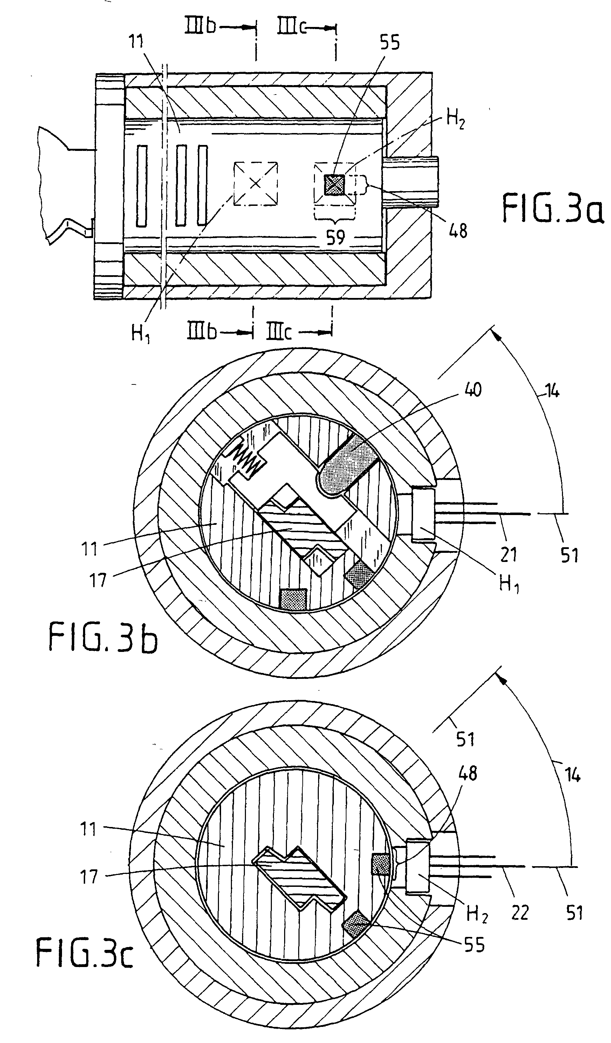

Ausweislich der Schnitte von Fig. 1b und 1c sind in den entsprechenden Axialzonen 58, 59 des Zylinderkerns 11 weitere Permanentmagnete 55 vorgesehen, die nicht, wie die Sperrleiste 40 radial beweglich, sondern fest in geeigneten Aussparungen 54 in der Umfangsfläche eingelassen sind. Die Permanentmagnete 55 können damit bündig mit der Umfangsfläche des Zylinderkerns 11 liegen. Diese Permanentmagnete 55 sind in den Zeichnungen durch Punktschraffur hervorgehoben. Bei der gegebenen Konstruktion des Schließzylinders 10 haben die Permanentmagnete 55 eine etwas höhere magnetische Feldstärke als das die Sperrleiste 40 aufbauende Magnetmaterial 45. Dies ist in den Zeichnungen durch eine unterschiedlich dichte Punktschraffur verdeutlicht. Im vorliegenden Fall sind in jeder der beiden Axialzonen 58, 59 jeweils zwei solcher ortsfester Permanentmagnete 55 vorgesehen, und zwar an definierten, noch näher zu beschreibenden Umfangsstellen 46, 47, 48, 49 des Zyklinderkerns 11. Diese sind entsprechend den Drehwinkeln zwischen der Ausgangs-Drehstellung 50 und den drei weiteren Arbeitsstellungen 51, 52, 53 zueinander gewählt, wie sich aus der Betrachtung der weiteren Figuren 3a bis 5c ergibt.

In Fig. 3a bis 3c ist der Zylinderkern 11 durch eine Schlüsseldrehung 14 in eine erste Arbeitsstellung 51 gekommen, in welcher bei der Anwendung auf einen Zündanlaßschalter bei der Vorrichtung die Kraftfahrzeug-Elektrik eingeschaltet wird. Man nennt diese Arbeitsstellung 51 auch "Radiostellung". Bei einem Zündanlaßschalter spricht man in dieser Arbeitsstellung 51 von einer Stromversorgung einer "Klemme R" der zugehörigen Schalteinrichtung. Diese Arbeitsstellung 51 des Zylinderkerns 11 ist durch nicht näher gezeigte Rastelemente festgelegt und bei der Schlüsseldrehung 14 spürbar. In dieser Drehstellung hat sich die Sperrleiste 40 noch weiter vom Sensor H1 entfernt, weshalb dieser, wie in der dritten Zeile der Code-Tabelle von Fig. 6 zu erkennen ist, kein Signal an den Auswerter 20 weitergibt. In der benachbarten Axialzone 59 des Zylinderkerns 11 hat sich aber ein Permanentmagnet 55 mit dem Sensor H2 radial ausgerichtet. Dieser Permanentmagnet 55 befindet sich nämlich an einer Umfangsstelle 48 dieser Zone 59, die bei der Drehung in die Arbeitsstellung 51 in die Nähe des Sensors H2 kommt. Über dessen Sensorausgang 22 erhält der Auswerter 20 ein Signal, wie aus der dritten Zeile der Code-Tabelle von Fig. 6 zu entnehmen ist. Durch den Empfang dieses Codes "nein/ja" stellt der Auswerter 20 eindeutig diese erste Arbeitsstellung 51 des Zylinderkerns 11 fest. Weil der Auswerter wie eine elektronische Schalteinrichtung wirkt, gibt er die entsprechenden Steuerbefehle an die Aggregate bzw. den diese Aggregate steuernden Bordcomputer. Dies ist anhand der Fig. 7 dadurch veranschaulicht, daß jetzt ein Steuersignal über die zweite Ausgangsleitung 24 abgegeben wird. In der Fachsprache heißt dies, daß die "Klemme R" aktiviert wird.

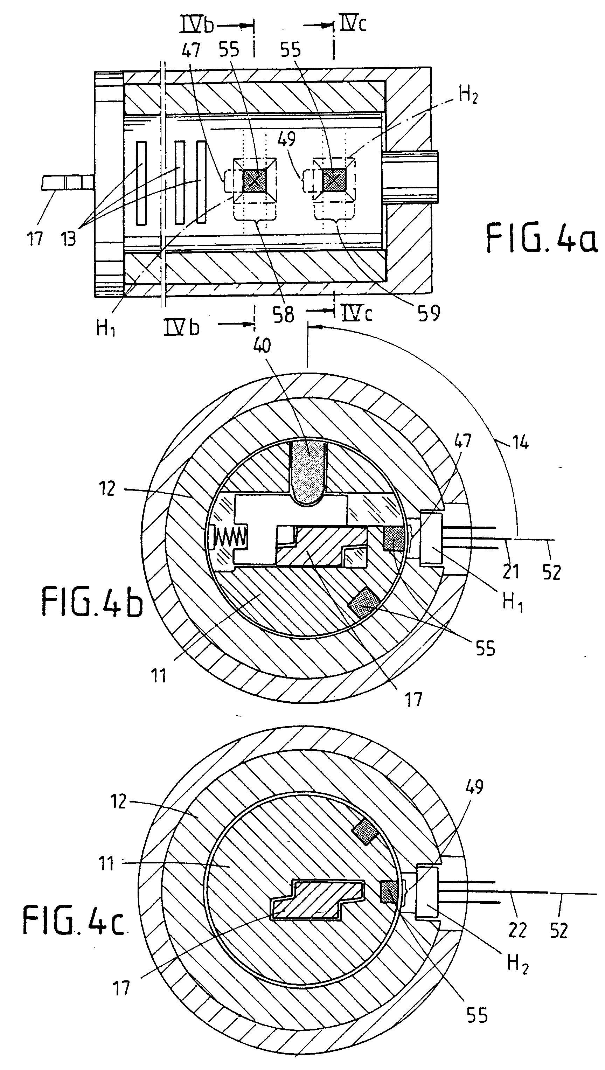

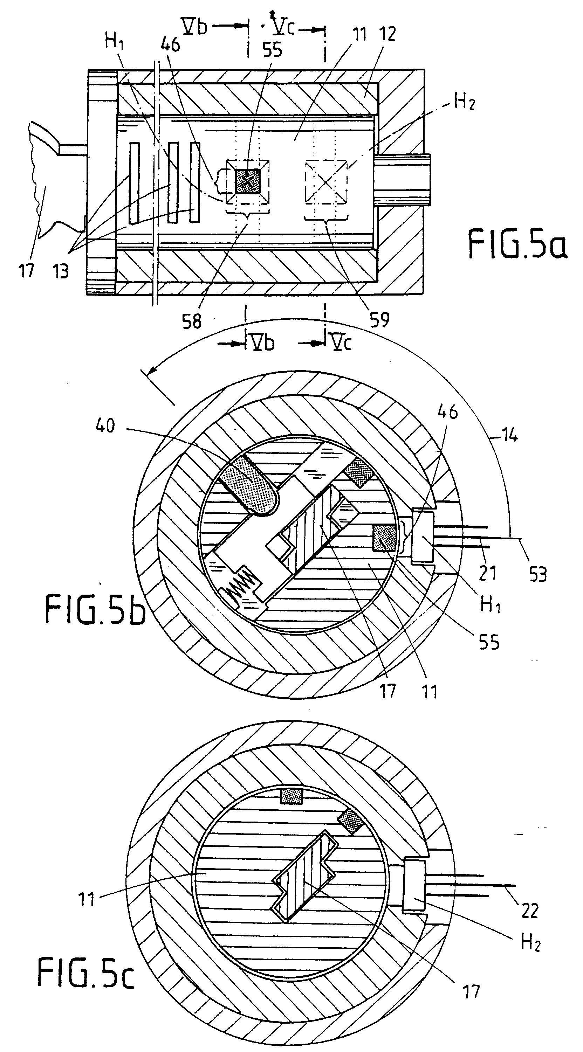

In den Fig. 4a bis 4c ist der Zylinderkern 11 soweit gemäß dem Pfeil 14 weitergedreht worden, daß eine zweite Arbeitsstellung 52 erzielt worden ist. In den beiden Axialzonen 58, 59 des Zylinderkerns befinden sich an den mit 47 und 49 gekennzeichneten Umfangsstellen, die dann mit den beiden Sensoren H1, H2 im Zylindergehäuse 12 ausgerichtet sind, weitere Permanentmagnete 55. Auch diese Arbeitsstellung 52 macht sich durch Rastelemente bemerkbar, die beim Drehen 14 des Schlüssels 17 spürbar sind. Der Auswerter 20 stellt in diesem Fall an beiden Sensorausgängen 21, 22 ein Signal fest, wie es in der vierten Zeile der Code-Tabelle von Fig. 6 zu erkennen ist. Über diesen ermittelten Code "ja/ja" identifiziert der Auswerter 20 die Drehposition des Zylinderkerns 11 als zweite Arbeitsstellung und gibt ein entsprechendes Steuersignal an die jetzt wirksam zu setzenden Aggregate des Kraftfahrzeugs weiter. Bei einem Zündanlaßschalter ist diese zweite Arbeitsstellung normalerweise für die Zündfreigabe des Motors verantwortlich. Dies ist im Schema von Fig. 7 durch eine dritte Ausgangsleitung 25 symbolisiert, die nun angesteuert wird. Traditionsgemäß spricht man hier bei einem Zündanlaßschalter von einer "Klemme 15" an der Schalteinrichtung, die in dieser Arbeitsstellung mit elektrischem Strom zu versorgen ist.

in den Fig. 5a bis 5c ist der Zylinderkern 11 soweit gemäß Pfeil 14 gedreht worden, daß eine dritte definierte Arbeitsstellung 53 erreicht worden ist. Diese dritte Arbeitsstellung 53 kann durch einen am Zylinderkern 11 wirksam werdenden Dreh-Endanschlag bestimmt sein. In diesem Fall befindet sich nur an der Umfangsstelle 46 in der zum Sensor H1 gehörenden Axialzone 58 vom Zylinderkern 11 ein Permanentmagnet 55, während in der anderen Axialzone 59 eine leere Umfangsstelle des Zylinderkerns 11 erscheint. Dadurch stellt nur der erste Sensor H1 ein Signal fest, das über den Sensorausgang 21 an den Auswerter 20 gelangt. Der Sensor H2 liefert kein Signal. Der Auswerter 20 stellt in diesem Fall den Code "ja/nein" gemäß der letzten Zeile der Code-Tabelle von Fig. 6 fest.

Ein solcher Code hat sich bereits in der ersten Zeile von Fig. 6 ergeben, der anhand der Fig. 1a bis 1c beschrieben worden ist. Dort befand sich aber der Zylinderkern 11 noch in der Ausgangs-Drehstellung, wo der Auswerter 20 noch inaktiv war. Dort war der Schlüssel 17 noch nicht eingesteckt und der Zylinderkern 11 durch die Sperrleiste 40 blockiert. Im Falle der Fig. 5a bis 5c ist der Auswerter 20 aber aktiviert und identifiziert daher diesen Code "ja/nein" eindeutig als dritte Arbeitsstellung des Zylinderkerns 11. Diese entspricht, bei einer Anwendung der Vorrichtung auf einen Zündanlaßschalter, üblicherweise der elektrischen Funktion "Anlassen" einer zugehörigen Schalteinrichtung, wo der Verbrennungsmotor im Kraftfahrzeug gestartet wird. Man spricht in diesem Fall von der Aktivierung einer "Klemme 50". Bei der vorliegenden Erfindung schaltet im Schema von Fig. 7 der Auswerter 20 eine vierte Ausgangsleitung 26 wirksam.

Der als elektronische Schalteinrichtung wirkende Auswerter 20 aktiviert in diesem Fall den Anlasser im Kraftfahrzeug. Üblicherweise steht der Zylinderkern 11 eines Zündanlaßschalters unter der Wirkung einer Drehimpuls-Feder, die bestrebt ist, nach Freigabe des Schlüssels 17 den Zylinderkern 11 von selbst in die zweite Arbeitsstellung von Fig. 4a bis 4c zurückzuführen. Auch letzteres stellt der Auswerter 20 anhand des sich dadurch ändernden, aus Fig. 6 ersichtlichen Codes "ja/ja" eindeutig fest.

In Fig. 8 ist ein Bruchstück eines erfindungsgemäßen Schließzylinders 10' in einer alternativen Ausführung dargestellt. Der Unterschied gegenüber dem vorbeschriebenen ersten Ausführungsbeispiel besteht darin, daß in jener Axialzone 38, wo ein Sensor H2 im Zylindergehäuse sitzt, ein Ring oder ein Ringsegment 56 aus magnetisierbarem Material im Zylinderkern 11' angeordnet ist. An derjenigen Umfangsstelle des Zylinderkerns 11', an denen die als Code feststellbaren Permanentmagnete 55' gemäß Fig. 8 entstehen sollen, wird das Material einer polarisierten Magnetisierung unterzogen. Dann stellt ein Sensor H2 an definierten Ringabschnitten 57 das Magnetfeld fest und der Auswerter 20 ermittelt daraus wieder über den Code die jeweiligen Arbeitsstellungen. Der als Permanentmagnet 55' in Fig. 8 wirkende Ringabschnitt 57 ist durch Punktschraffur veranschaulicht. In Fig. 8 ist die radiale Ausrichtung dieses durch Magnetisierung relevanten Ringabschnitts 57 mit dem Sensor H2 gezeigt. Dies entspricht der in den Fig. 3a bis 3c gezeigten ersten Arbeitsstellung des Zylinderkerns 11'.

Die Ausbildung des Schließzylinders 10' gemäß Fig. 8 ermöglicht es, daß zunächst alle Zylinderkerne - unabhängig von dem gewünschten Code - vorgefertigt werden können. Die Anordnung der Permanentmagnete 55' entsprechend der individuellen Codierung der Drehstellungen der Zylinderkerne 11' erfolgt dann durch die entsprechende Magnetisierung 55' der betreffenden Ringabschnitte 57. Man könnte die Magnetisierung an den definierten Ringabschnitten 57 der Ringe bzw. Ringsegmente 56 aber auch vor deren Einbau im Zylinderkern 11' ausführen.

Es versteht sich, daß die Anzahl der Sensoren H1, H2 und ihre Anordnung, je nach Anwendungsfall, auch anders ausgebildet sein könnten. Dies gilt auch für die Anzahl und die Lage der Permanentmagnete. Bedarfsweise könnte man auf die Verwendung einer vom Schlüssel 17 radial beweglichen Sperrleiste 40 verzichten oder diese Sperrleiste 40 nicht aus Magnetmaterial 45 ausbilden. Bei der vorliegenden Erfindung signalisiert die Sperrleiste 40 wegen ihres Magnetmaterials 45 dem Auswerter 20, ob der richtige Schlüssel im Zylinderkern 11 eingesteckt ist oder nicht. Das wird zur Aktivierung und Deaktivierung des Auswerters 20, des Bordcomputers bzw. der Zentralelektrik genutzt. Die in Magnetfeldstärke der einzelnen Permanentmagnete 55 bzw. die durch Magnetisierung stellenweise entstehenden Permanentmagnete 55' könnten eine zueinander unterschiedliche Magnetfeldstärke oder Magnetfeldrichtung aufweisen, was von den Sensoren H1, H2 beachtet und auch ausgewertet werden könnte. Mit diesen Maßnahmen würde sich die Variationsvielfalt des Codes beträchtlich erhöhen. Man könnte dann bereits in einer Axialzone 38 und/oder 39 durch unterschiedliche Magnete 55 bzw. Magnetisierungen 55' hinsichtlich Richtung und/oder Stärke des Magnetfeldes genügend Informationen anordnen, um die jeweilige individuelle Arbeitsstellung 51, 52, 53 des Zylinderkerns 11 bzw. 11' über einen einzigen Sensor H1 oder H2 ermitteln zu können. In diesem Fall variiert nur die Anzahl der Sensoren und die Unterschiede der Permanentmagnete an den spezifischen Umfangsstellen des Zylinderkerns 11 bzw. 11'.

Bei der erfindungsgemäßen Vorrichtung sind am Innenende 19 des in Fig. 1a gezeigten Schließzylinders 10 keine Bauteile für eine davon zu steuernde Schalteinrichtung erforderlich. Dieser Platz kann zur Anordnung weiterer wichtiger Bauteile im Kraftfahrzeug genutzt werden.

### Bezugszeichenliste:

- H1: erster Sensor, Hall-Element
- H2: zweiter Sensor, Hall-Element

- 10, 10': Schließzylinder
- 11, 11': Zylinderkern von 10 bzw. 10'
- 12: Zylindergehäuse von 10
- 13: Zuhaltung in 11
- 14: Drehpfeil von 11
- 15: Zylinderachse von 10
- 16: Schlüsselkanal in 11
- 17: Schlüssel
- 18: radiale Kammer für 31
- 19: Innenende von 10
- 20: Auswerter
- 21: Sensorausgang von H1
- 22: Sensorausgang von H2
- 23: erste Ausgangsleitung von 20
- 24: zweite Ausgangsleitung von 20
- 25: dritte Ausgangsleitung von 20
- 26: vierte Ausgangsleitung von 20
- 27: Stromversorgungsleitung von 20
- 28: Massenleitung von 20
- 29: Längsversatz zwischen H1, H2 in 12
- 30: Chassis für 10
- 31: Schieber
- 32: Pfeile der Kraftbelastung von 31
- 33: Feder für 32
- 34: Aussparung in 31 für 41
- 35: Aufnahme in 12 für H1
- 36: Aufnahme in 12 für H2
- 37: Steuerfläche an 17 für 13 bzw. 31
- 38: axiale Zone in 12 für H1
- 39: axiale Zone in 12 für H2
- 40: Sperrleiste
- 41: Steuerende von 40
- 42: Arbeitsende von 40
- 43: Gehäusenut von 42
- 44: Kraftpfeil für Federbelastung von 40
- 45: Magnetmaterial von 40
- 46: erste Umfangsstelle an 11 in 58
- 47: zweite Umfangsstelle in 11 bei 58
- 48: erste Umfangsstelle in 59 von 11
- 49: zweite Umfangsstelle in 59 von 11
- 50: Ausgangs-Drehstellung von 11
- 51: erste Arbeitsstellung von 11 (Radio)
- 52: zweite Arbeitsstellung von 11 (Zünden)
- 53: dritte Arbeitsstellung von 11 (Anlassen)
- 54: Aussparung für 55 in 11
- 55, 55': Permanentmagnet in 11, 11'
- 56: Ring, Ringsegment
- 57: magnetisierter Ringabschnitt von 56
- 58: erste Axialzone von 11 für 40 bzw. 55
- 59: zweite Axialzone in 11 für 55

## Patentansprüche

1. Vorrichtung mit einem schlüsselbetätigbaren Schließzylinder (10) und mit einer Schalteinrichtung,
die in Abhängigkeit von der jeweiligen Schlüsseldrehung (14) eine bestimmte elektrische Funktion in einem Kraftfahrzeug od. dgl. wirksam bzw. unwirksam setzt,
insbesondere Zündanlaßschalter für ein Kraftfahrzeug,
wobei der Schließzylinder (10) aus einem ortsfesten Zylindergehäuse (12) und einem darin drehgelagerten Zylinderkern (11) besteht,
der - von einer Ausgangs-Drehstellung (50) aus - durch die Schlüsseldrehung (14) wahlweise in eine von mehreren definierten Arbeitsstellungen (51, 52, 53) überführt wird, in welchen die Schalteinrichtung jeweils eine für diese Arbeitsstellung spezifische, elektrische Funktion im Kraftfahrzeug od. dgl. ausführt,
im Inneren des Zylinderkerns (11) außer Zuhaltungen (13) zu seiner Drehsperrung im Zylindergehäuse (12) auch ein Schlüsselkanal (16) zur Aufnahme des Schlüssels (17) zwecks Entsperrung des Zylinderkerns (11) vorgesehen ist,
und im Umfang des Zylinderkerns (11) Permanentmagnete (55) angeordnet sind,
und im Zylindergehäuse (12) außer wenigstens einem Sperrkanal für die Zuhaltungen (13) auch noch auf die Permanentmagnete (55) des Zylinderkerns ansprechende Sensoren angeordnet sind,
**dadurch gekennzeichnet**,
daß das Zylindergehäuse (12) in zueinander axial längsversetzten (29) Zonen (58, 59) wenigstens zwei Sensoren (H1, H2) trägt, deren Sensorausgänge (21, 22) mit einem gemeinsamen Auswerter (20) verbunden sind,
und der Zylinderkern (11) in den entsprechenden Axialzonen (58, 59) mehrere Permanentmagnete (40, 55) an jenen Umfangsstellen (46, 47, 48, 49) besitzt,
die im Zusammenspiel mit den Sensoren (H1, H2) eine die Ausgangs-Drehstellung (50) und die verschiedenen Arbeitsstellungen (51, 52, 53) des Zylinderkerns (11) unterscheidende elektrische Codierung an den Sensorausgängen (21, 22) liefern,
und daß der Auswerter (20) nicht nur über den Code die Ausgangs-Drehstellung (50) und die jeweilige Arbeitsstellung (51, 52, 53) des Zylinderkerns (11) eindeutig identifiziert, sondern auch - anhand des ermittelten Codes - die zu dieser Arbeitsstellung (51, 52, 53) gehörende elektrische Funktion im Kraftfahrzeug od. dgl. auslöst.

2. Vorrichtung nach Anspruch 1, dadurch gekennzeichnet, daß die Sensoren (H1, H2) im Zylindergehäuse (12) im wesentlichen miteinander axial ausgerichtet sind.

3. Vorrichtung nach Anspruch 1 oder 2, dadurch gekennzeichnet, daß der Zylinderkern (11) in jeder der mit einem der Sensoren (H1, H2) ausgerichteten Axialzone (58, 59) wenigstens zwei Permanentmagnete (55) besitzt und - bei einem Vergleich der Anordnungsmuster der Magnete in den einzelnen Axialzonen (58, 59) - mindestens einer der Permanentmagnete (55) an einer drehversetzten, eine andere Arbeitsstellung (51, 52, 53) des Zylinderkerns (11) kennzeichnenden Umfangsstelle (46, 47, 48, 49) sitzt.

4. Vorrichtung nach einem oder mehreren der Ansprüche 1 bis 3 mit einer radial beweglichen Sperrleiste (40) im Zylinderkern (11), die zwar bei abgezogenem Schlüssel (17) in einer den Zylinderumfang radial überragenden Sperrlage gehalten wird, wo sie in eine im Zylindergehäuse (12) vorgesehenen Nut (43) eingreift und eine Drehung (14) verhindert,
die aber bei eingestecktem ordnungsgemäßem Schlüssel (17) in eine abgesenkte Freigabelage gelangt, wo sie die Gehäusenut (43) freigibt und eine Zylinderdrehung (14) mit dem Schlüssel (17) zuläßt,
**dadurch gekennzeichnet,**
daß die Sperrleiste (40) magnetisierbar ist oder selbst ein Permanentmagnet (45) ist, dem ein auf ihr Magnetfeld ansprechender Leistensensor (H1) zugeordnet ist,
und der Leistensensor (H1) an jener Innenstelle des Zylindergehäuses sitzt, die mit der Sperrleiste (40) dann im wesentlichen radial ausgerichtet ist,
wenn sich der Zylinderkern (11) in seiner Ausgangs-Drehstellung (50) befindet, wo das Einstecken und Herausziehen des Schlüssels (17) in seinen Schlüsselkanal (16) möglich sind,
und daß der Leistensensor (H1) bereits beim Einstecken des ordnungsgemäßen Schlüssels (17) auf die Magnetfeldänderung anspricht, die sich durch das Absenken der Sperrleiste (40) aus ihrer Sperrlage in ihre Freigabelage ergibt,
und daß der Auswerter (20) auf dieses Signal anspricht und die Ausgangs-Drehstellung (50) mit eingestecktem ordnungsgemäßem Schlüssel (17) feststellt.

5. Vorrichtung nach Anspruch 4, dadurch gekennzeichnet, daß der Auswerter (20) in der Ausgangs-Drehstellung (50) bei nicht eingestecktem Schlüssel in einer inaktiven Ruheposition verharrt, aber der Auswerter (20) durch das von der Magnetfeldänderung beim Absenken der Sperrleiste (40) ausgelöste Signal aktiviert wird.

6. Vorrichtung nach Anspruch 5, dadurch gekennzeichnet, daß die Aktivierung des Auswerters (20) nur dann erfolgt, wenn die sensierte Magnetfeldänderung innerhalb bestimmter Grenzwerte liegt.

7. Vorrichtung nach einem oder mehreren der Ansprüche 4 bis 6, dadurch gekennzeichnet, daß der Leistensensor (H1) bei der Drehung (14) des Zylinderkerns (11) auch auf den bzw. auf die weiteren radial unbeweglichen Permanentmagnete (55) anspricht,
die in der gleichen Axialzone (58) wie die radialbewegliche Sperrleiste (40) angeordnet sind.

8. Vorrichtung nach einem oder mehreren der Ansprüche 1 bis 7, dadurch gekennzeichnet, daß der Zylinderkern (11') einen Ring bzw. ein Ringsegment (56) aus magnetisierbarem Material in jener Axialzone aufweist, die mit einem der Sensoren (H2) ausgerichtet ist,
und daß der Permanentmagnet (55') an der gewünschten Umfangsstelle des Zylinderkerns (11') durch eine polarisierte Magnetisierung des Materials vom Ring bzw. Ringsegment (56) in einem definierten Ringabschnitt (57) erzeugt wird.

9. Vorrichtung nach einem oder mehreren der Ansprüche 1 bis 8, dadurch gekennzeichnet, daß die Sensoren H1, H2 auf unterschiedliche Magnetfeldstärken und/oder Magnetfeldrichtungen der an den diversen Umfangsstellen angeordneten, zueinander unterschiedlichen Permanentmagnete (55, 55') ansprechen, die vom Auswerter (20) als unterschiedliche Codes registriert werden.

## Claims

1. A device with a key-operable lock cylinder (10) and with a switching device,
which as a function of the respective key rotation (14) renders a particular electrical function in a motor vehicle or the like effective or ineffective,
more particularly an ignition starter switch for a motor vehicle,
the lock cylinder (10) being formed by a stationary cylinder housing (12) and a cylinder core (11), which is rotatably mounted within said cylinder housing and
- from a starting rotary position (50) - is selectively transferred by the key rotation (14) into one of a plurality of defined operating positions (51, 52, 53), in which the switching device respectively carries out an electrical function in the motor vehicle or the like specific to the said operating position,
a key duct (16) for receiving the key (17) for unlocking the cylinder core (11) also being provided in the interior of the cylinder core (11) in addition to tumblers (13) for the rotary locking of the cylinder core (11) in the cylinder housing (12),
and permanent magnets (55) being arranged in the circumference of the cylinder core (11),
and sensors responding to the permanent magnets (55) of the cylinder core also being arranged in the cylinder housing (12) in addition to at least one locking duct for the tumblers (13),
**characterised in that**
the cylinder housing (12) supports at least two sensors (H1, H2) in zones (58, 59) axially longitudinally offset relative to one another (29), whose sensor outputs (21, 22) are connected to a common evaluator (20),
and the cylinder core (11) comprises a plurality of permanent magnets (40, 55) in the corresponding axial zones (58, 59) at those circumferential locations (46, 47, 48, 49),
which cooperate with the sensors (H1, H2) to supply the sensor outputs (21, 22) with electrical coding determining the starting rotary position (50) and the various operating positions (51, 52, 53) of the cylinder core (11),
and the evaluator (20) not only clearly identifies the starting rotary position (50) and the respective operating position (51, 52, 53) of the cylinder core (11) by way of the code, but also - with the aid of the determined code - triggers the electrical function in the motor vehicle or the like belonging to this operating position (51, 52, 53).

2. A device according to claim 1, characterised in that the sensors (H1, H2) are aligned substantially axially to one another in the cylinder housing (12).

3. A device according to claim 1 or 2, characterised in that the cylinder core (11) comprises at least two permanent magnets (55) in each of the axial zones (58, 59) aligned with one of the sensors (H1, H2) and - with a comparison of the arrangement pattern of the magnets in the individual axial zones (58, 59) - at least one of the permanent magnets (55) is disposed in a rotationally offset circumferential location (46, 47, 48, 49) characterising a different operating position (51, 52, 53) of the cylinder core (11).

4. A device according to one or more of claims 1 to 3 with a radially movable locking bar (40) in the cylinder core (11), which is held in a locking position projecting radially beyond the cylinder circumference when the key (17) is removed, where it engages in a groove (43) provided in the cylinder housing (12) and prevents a rotation (14),
but moves into a lowered release position when the key (17) is correctly inserted, where it releases the housing groove (43) and allows a cylinder rotation (14) with the key (17),
**characterised in that**
the locking bar (40) can be magnetised or is itself a permanent magnet (45), with which a bar sensor (H1) is associated, which responds to the magnetic field of the locking bar (40),
and the bar sensor (H1) is arranged at the internal location of the cylinder housing which is substantially radially aligned with the locking bar (40)
when the cylinder core (11) is located in its starting rotary position (50), where the insertion and removal of the key (17) into/from its key duct (16) is possible,
and the bar sensor (H1) already responds upon insertion of the correct key (17) to the magnetic field variation resulting from the lowering of the locking bar (40) from its locking position into its release position,
and the evaluator (20) responds to this signal and determines the starting rotary position (50) with the inserted correct key (17).

5. A device according to claim 4, characterised in that, in the starting rotary position (50), the evaluator (20) locks in an inactive inoperative position when no key is inserted, but is actuated by the signal triggered by the magnetic field variation when the locking bar (40) is lowered.

6. A device according to claim 5, characterised in that the actuation of the evaluator (20) only occurs when the sensed magnetic field variation lies within given threshold values.

7. A device according to one or more of claims 4 to 6,
characterised in that, with the rotation (14) of the cylinder core (11), the bar sensor (H1) also responds to the radially immovable permanent magnet or the further radially immovable permanent magnets (55),
which are arranged in the same axial zone (58) as the radially movable locking bar (40).

8. A device according to one or more of claims 1 to 7,
characterised in that the cylinder core (11') comprises a ring or a ring segment (56) of magnetisable material in the axial zone which is aligned with one of the sensors (H2),
and the permanent magnet (55') is produced at the desired circumferential location of the cylinder core (11') by a polarised magnetisation of the material of the ring or ring segment (56) in a defined ring section (57).

9. A device according to one or more of claims 1 to 8,
characterised in that the sensors (H1, H2) respond to different magnetic field intensities and/or magnetic field directions of the permanent magnets (55, 55') which differ from one another and are arranged at the various circumferential locations, the said differences being registered by the evaluator (20) as different codes.

## Revendications

1. Dispositif avec un cylindre de serrure (10) susceptible d'être actionné par une clé et avec un organe de commutation,
qui, en fonction de la rotation correspondante (14) de la clé rend active ou inactive une fonction électrique déterminée dans un véhicule ou similaire,
en particulier un commutateur de mise en service de l'allumage pour un véhicule automobile,
le cylindre de serrure (10) se composant d'un boîtier de cylindre (12) localement fixe et d'un noyau de cylindre (11) monté à rotation dans le boîtier,
noyau qui - en partant d'une position de rotation (50) de départ - est déplacé par la rotation (14) de la clé au choix dans l'une parmi plusieurs positions de travail (51, 52, 53) définies, et dans lequel l'organe de commutation réalise chaque fois dans le véhicule ou similaire une fonction électrique spécifique pour cette position de travail,
dans lequel dispositif sont prévus à l'intérieur du noyau (11) de cylindre des paillettes de gorge extérieures (13) pour verrouiller en rotation le noyau dans le boîtier de cylindre (12) et également un canal de clé (16) pour la réception de la clé (17) afin de déverrouiller le noyau de cylindre (11),
et dans lequel des aimants permanents (55) sont disposés à la périphérie du noyau (11) du cylindre,
et dans lequel, dans le boîtier de cylindre (12) hors d'au moins un canal de blocage pour les paillettes de gorge (13) sont également encore disposés sur les aimants permanents (55) du noyau de cylindre, des capteurs correspondants,
caractérisé en ce que :
le boîtier de cylindre (12) porte dans des zones (58, 59) décalées longitudinalement (en 29) les unes par rapport aux autres, au moins deux capteurs (H1, H2) dont les sorties de capteur (21, 22) sont reliées à un déclencheur (20) commun,
et en ce que le noyau de cylindre (11) comporte dans les zones axiales (58, 59) correspondantes plusieurs aimants permanents (40, 55) aux emplacements périphériques conjugués (46, 47, 48, 49),
qui, en collaboration avec les capteurs (H1, H2), livrent aux sorties (21, 22) des capteurs un codage électrique discriminant la position en rotation (50) de départ et
les diverses positions de travail (51, 52, 53) du noyau (11) de cylindre,
et en ce que le déclencheur (20), non seulement identifie nettement via les codes la position en rotation (50) de départ et la position de travail correspondante (51, 52, 53) du noyau (11) de cylindre, mais également déclenche - à l'aide du code déterminé - la fonction électrique dans le véhicule ou similaire, appartenant à cette position de travail (51, 52, 53).

2. Dispositif selon la revendication 1, caractérisé en ce que les capteurs (H1, H2) dans le boîtier de cylindre (12) sont sensiblement alignés axialement les uns par rapport aux autres.

3. Dispositif selon la revendication 1 ou 2, caractérisé en ce que le noyau (11) de cylindre comporte dans chacune des zones axiales (58, 59) alignées avec l'un des capteurs (H1, H2), au moins deux aimants permanents (55) et en ce que - par comparaison du modèle d'agencement des aimants dans les zones axiales individuelles (58, 59) - au moins l'un des aimants permanents (55) est placé sur une position périphérique (46, 47, 48, 49) décalée en rotation, caractérisant une autre position de travail (51, 52, 53) du noyau (11) de cylindre.

4. Dispositif selon l'une ou plusieurs des revendications 1 à 3, avec, dans le noyau (11) de cylindre, une barrette de blocage (40) mobile radialement et qui est en fait retenue, lorsque la clé (17) est retirée, dans une position de blocage faisant saillie radialement sur la périphérie du cylindre, position dans laquelle elle s'engage dans une rainure (43) prévue dans le boîtier (12) de cylindre et empêche la rotation (14),
mais qui, lorsque la clé (17) est enfichée correctement, passe dans une position de libération rentrée, où elle libère la rainure (43) de boîtier et autorise la rotation (14) du cylindre par l'intermédiaire de la clé (17),
caractérisé en ce que :
la barrette de blocage (40) est magnétisable ou bien est elle-même un aimant permanent (45), auquel est associé un capteur de barrette (H1) réagissant au champ magnétique de la barrette ou de l'aimant,
et en ce que le capteur de barrette (H1) est placé sur un emplacement conjugué intérieur du boîtier de cylindre, emplacement qui est alors aligné de façon sensiblement radiale avec la barrette de blocage (40),
lorsque le noyau (11) de cylindre se trouve dans sa position de rotation (50) de départ où l'enfichage et le retrait de la clé (17) dans et respectivement hors de son canal de clé (16) sont possibles,
et en ce que le capteur de barrette (H1), dès l'enfichage de la clé correcte (17) réagit à la variation de champ magnétique, qui se produit à la suite de l'abaissement de la barrette de blocage (40) de sa position de blocage à sa position de libération,
et en ce que le déclencheur (20) réagit à ce signal et fixe la position de rotation (50) de départ avec la clé correcte (17) enfichée.

5. Dispositif selon la revendication 4, caractérisé en ce que le déclencheur (20) dans la position de rotation (50) de départ, lorsque la clé n'est pas enfichée, reste dans une position inactive, mais en ce que le déclencheur (20) est activé par le signal déclenché par la variation de champ magnétique au cours de l'abaissement de la barrette de blocage (40).

6. Dispositif selon la revendication 5, caractérisé en ce que l'activation du déclencheur (20) est réalisée seulement lorsque la variation de champ magnétique captée se trouve à l'intérieur de valeurs limites déterminées.

7. Dispositif selon l'une ou plusieurs des revendications 4 à 6, caractérisé en ce que le capteur de barrette (H1) au cours de la rotation (14) du noyau (11) de cylindre réagit également aux aimants permanents (55) ou aux autres aimants permanents (55) non mobiles radialement,
qui sont disposés dans la même zone axiale (58) que la barrette de blocage (40) mobile radialement.

8. Dispositif selon l'une ou plusieurs des revendications 1 à 7, caractérisé en ce que le noyau (11') de cylindre comporte dans chaque zone axiale une bague ou un segment (56) de bague en matière magnétisable et qui est aligné avec l'un des capteurs (H2),
et en ce que l'aimant permanent (55') est créé dans une partie de bague définie (57) à l'emplacement périphérique souhaité du noyau (11') de cylindre par une magnétisation polarisée du matériau de la bague ou du segment (56) de bague.

9. Dispositif selon l'une ou plusieurs des revendications 1 à 8, caractérisé en ce que les capteurs (H1, H2) réagissent à des amplitudes différentes de champ magnétique et/ou à des directions différentes de champ magnétique des aimants permanents (55, 55') disposés aux divers emplacements de la périphérie différents les uns des autres, ces amplitudes différentes et/ou ces directions différentes étant enregistrées par le déclencheur (20) comme des codes différents.
